# EUROPEAN PATENT SPECIFICATION

(11) **EP 0 777 387 B1**
(45) Date of publication and mention of the grant of the patent: **13.08.2003**
(21) Application number: 96118963.6
(22) Date of filing: 27.11.1996
(51) Int. Cl.: H04N 7/50

(54) **Method and apparatus for encoding digital video signals**
Verfahren und Einrichtung zur Kodierung digitaler Videosignale
Procédé et dispositif pour le codage de signaux vidéo numériques

(30) Priority: 06.12.1995 EP 95402786; 19.03.1996 EP 96104299
(43) Date of publication of application: 04.06.1997
(73) Proprietor: Harman/Becker Automotive Systems (XSYS Division) GmbH, 78050 Villingen-Schwenningen (DE)
(72) Inventor: Canfield, Barth, Fishers, IN 46038 (US); Lamouroux, Gilles, 38240 Meylan (FR); Teichner, Detlef, 78126 Königsfeld (DE); Kessler, Rolf, 78048 VS-Villingen (DE)
(74) Representative: Patentanwälte Westphal, Mussgnug & Partner

(56) References cited:
- US-A- 5 396 292
- IEEE TRANSACTIONS ON CONSUMER ELECTRONICS, vol. 40, no. 3, 1 August 1994, pages 466-472, XP000471207 AKIYAMA T ET AL: "MPEG2 VIDEO CODEC USING IMAGE COMPRESSION DSP"
- IEEE JOURNAL OF SOLID-STATE CIRCUITS, vol. 29, no. 12, 1 December 1994, pages 1474-1481, XP000495322 MASAKI TOYOKURA ET AL: "A VIDEO DSP WITH A MACROBLOCK-LEVEL-PIPELINE AND A SIMD TYPE VECTOR-PIPELINE ARCHITECTURE FOR MPEG2 CODEC"
- NEC RESEARCH AND DEVELOPMENT, vol. 35, no. 4, 1 October 1994, pages 355-365, XP000496855 TAMITANL I ET AL: "LSIS FOR AUDIO AND VIDEO MPEG STANDARDS"
- ELECTRONIC ENGINEERING, vol. 64, no. 790, 1 October 1992, pages 77, 79-80, 82, XP000320428 "TECHNOLOGY FOCUS: SYSTEM SOLUTIONS FOR MPEG IMAGING"

## Description

The present invention relates to a method and to an apparatus for video data compression and bitstream encoding.

Such methods and apparatus are known for example from IEEE TRANSACTIONS ON CONSUMER ELECTRONICS, vol. 40, no. 3, 1 August 1994, pages 466-472, XP000471207 AKIYAMA T ET AL: 'MPEG2 VIDEO CODEC USING IMAGE COMPRESSION DSP' and IEEE JOURNAL OF SOLID-STATE CIRCUITS, vol. 29, no. 12, 1 December 1994, pages 1474-1481, XP000495322 MASAKI TOYOKURA ETAL: 'A VIDEO DSP WITH A MACROBLOCK-LEVEL-PIPELINE AND A SIMD TYPE VECTOR-PIPELINE ARCHITECTURE FOR MPEG2 CODEC.

These two document disclose each MPEG encoders.

### Background

ISO/IEC have standardized a video bit stream representing video compression methods for standard resolution as well as high resolution video signals and pictures, the so-called MPEG-2 standard.
MPEG-2 provides for three different picture coding types: Intra (I), Predicted (P) and Bidirectionally predicted or interpolated (B) frames or fields. Still, in P and B frames or fields, macroblocks can be coded intraframe or intrafield, respectively, if motion prediction does not give good results. The decision has to be made in the encoder with criteria to be determined by the implementation. In addition, MPEG-2 allows for frame or field based DCT (Discrete Cosine Transform), which requires sorting of lines and another decision to be made by the encoder.
In digital video broadcasting applications, decoders are usually needed in a high volume while only a small number of encoders are employed to provide the service. A typical configuration is given by the DirecTv satellite service in the USA, where MPEG-2 encoders for about 150 simultaneous programs provide a nationwide broadcasting service. This requires relatively cheap decoders whereas encoders can include more exhaustive circuitry and can be more expensive. MPEG-2 video encoding and decoding can be implemented in an asymmetrical manner in which encoders include a high degree of complex circuitry while decoders must include only that range of functionality absolutely required to decode valid bit streams.
For that purpose, MPEG defines the syntax and the semantics of the bit stream and a so-called System Target Decoder. The implementation of the encoder is not ruled by the standard. This allows to built relatively simple encoders for applications with low demands on picture quality, as well as very complex encoders for high quality requirements.
For video broadcasting and entertainment applications reference levels for picture quality are set by existing video standards. For broadcasting of live events real-time operation of the encoder is a must. In order to cope with all different digital video applications and their respective requirements, the so-called MPEG Committee (Working Group 11 of ISO/IEC) has defined a set of Profiles and Levels. Profiles determine a certain subset of encoding tools belonging to the MPEG-2 standard. Different tools are used for specific encoding methods and applications. Levels restrict the vast ranges of parameters to those numbers which are used in common applications such as video broadcasting or video transmission over networks.
For video broadcasting services standard resolution video is related to ITU-R Recommendation 601 specifications or subsets of these, and can be handled by MPEG-2 Main Profile at Main Level (MP@ML). High definition video can be covered by the parameter sets defined in the High Levels of MPEG-2 (f.e. MP@HL).
The Main Profile comprises compression methods for video in the so-called 4:2:0 format, and it defines a variety of motion compensation and encoding modes, which are needed for high compression ratios. Motion compensation in the MP is based on frame and field based prediction in forward and backward direction, and includes refinements specifically targeted for interlaced video signals, such as the Dual Prime technique. For encoding, the MP allows frame and field based DCT, linear and non-linear quantization, standard and alternative zigzag scanning, and more.
Digital video broadcasting services will be based on bit rates in the range from as low as 1Mbit/s up to about 10Mbit/s. Raw data rates of video signals digitized according to the ITU-R Recommendation 601 comprise about 166Mbit/s, without blanking intervals, clock and synchronization. For a typical bit rate of 4Mbit/s, which shall provide picture quality similar to existing NTSC and PAL video standards, a compression factor in the range of 40 is needed.
Compression ratios in this range are relatively easy to achieve for video signals which originate from film material, due to their non-interlaced nature and their low temporal repetition rate of 24Hz. Much more demanding requirements come from real video signals originated from video cameras, especially in sequences with rapid and random motion. For adequate reproduction of such pictures at high compression ratios, all motion prediction and encoding alternatives provided by MPEG-2 MP are mandatory.

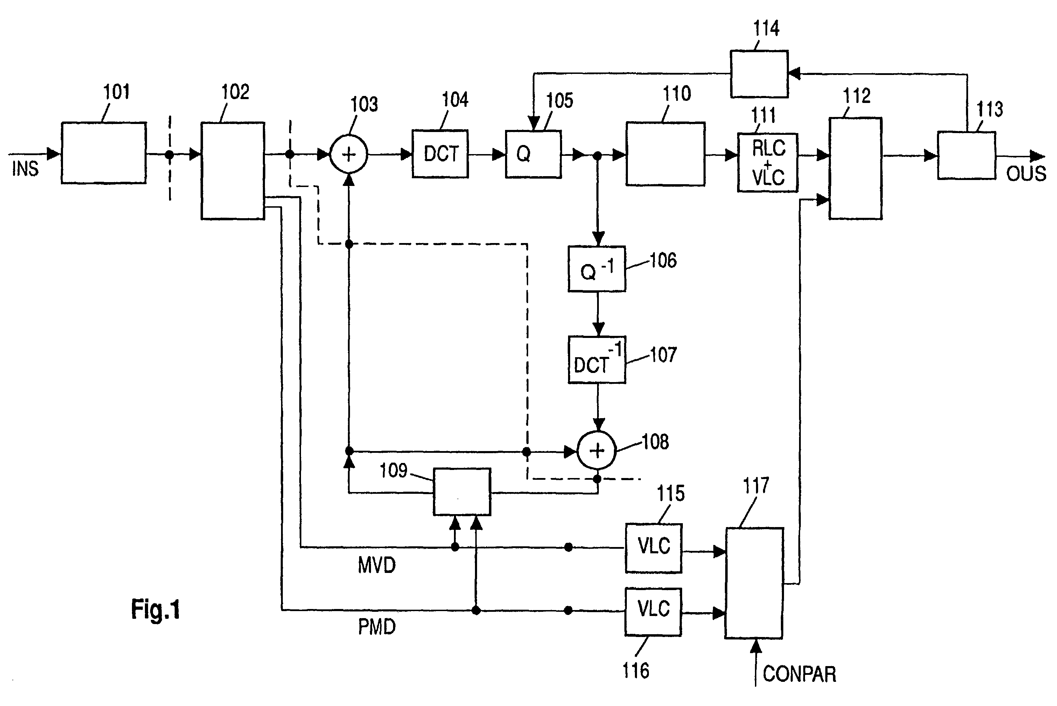

The principle functional blocks for encoding MPEG-2 video data streams according to the Main Profile MP from digital video signals are shown in Fig. 1. In such basic encoder arrangement, which is well-known in the art, digitized video signals are fed into a picture organization block 101, which rearranges the line and field wise luminance and chrominance signals in a macroblock and block order as used for a subsequent motion estimation and coding. Reorganization of the field or frame sequence of such video data is also done in block 101. A motion estimation stage 102 calculates suitable macroblock correspondences between consecutive pictures in form of motion vectors for different types of prediction, as permitted and supported by the syntax and semantics of the ISO/IEC 13818-2 standard, i.e. frame prediction, field prediction, and dual prime prediction. Macroblocks of 16*16 pixels are forwarded to a combiner 103 and motion vector parameters or data MVD and prediction mode descriptors PMD are led to a predictor 109, to a first VLC (variable length coding) encoder 115 for the motion vector parameters, and to a second VLC encoder 116 for the prediction modes. For predicted macroblocks (P and B pictures) the combiner 103 takes the macroblocks from the motion estimation stage 102 and from the predictor 109 and calculates difference signals consisting of pixel differences for each pixel of the respective macroblocks. These difference signals are fed to a DCT stage 104 and transformed for each 8*8 pixel block into corresponding arrays of 8*8 DCT coefficients. In case of non-predicted macroblocks (I pictures) passes the output from stage 102 to DCT stage 104 without forming difference signals.
The coefficient arrays are forwarded to a quantization stage 105 comprising tables for dividing each coefficient according to a respective table entry and a scaling factor. The output of the quantizer 105 is forwarded to a zigzag scan unit 110 and to an inverse quantizer 106. The inverse quantizer performs the inverse operation of quantizer 105 in that it multiplies each input value with the respective table entry and scaling factor. Output signals of inverse quantizer 106 are led to the inverse DCT block 107 in which 8*8 arrays of DCT coefficients are inversely transformed into 8*8 blocks of pixel values. These pixel value blocks are forwarded to an adder 108 in which they are added to the corresponding output signals of predictor 109. Predictor stage 109 receives its input signals from the adder 108.
Predictor 109 stores the input signals macroblock wise and performs translational shifts of macroblocks in the respective picture array, i.e. motion compensation, according to the motion vectors and predictor values computed previously by motion detector 102. The output signals of this prediction procedure are forwarded to adder 108 and to combiner 103.
Output signals of the quantizer 105 in form of quantized DCT coefficients are lined up in unit 110 by zigzag scanning and are then forwarded to a RLC/VLC unit (run length coding) 111 which comprises all necessary RLC/VLC tables including escape codes of ISO/IEC 13818-2. The output signals of RLC/VLC stage 111 represent compressed picture data in a bit sequential data stream.

In VLC encoders 115 and 116 similar MPEG VLC transformations are performed for motion vectors and prediction modes. These transformed signals are inputted into a MPEG header generation unit 117 which also inserts control parameters CONPAR from an external controller device such as a personal computer. The completed header signals are led to a packetizer and multiplexer stage 112 which also receives the RLC/VLC data corresponding to the picture content from the RLC/VLC unit 111. In stage 112 all data is aligned and ordered according to ISO/IEC 13818-2 or 11172-2. Output signals of stage 112 are forwarded to a buffer 113, e.g. a RAM, which stores all incoming data and measures the filling status. In respect to the actual filling status buffer 113 feeds a signal to a rate control unit 114, which again calculates corresponding quantization scaling parameters to be applied in quantization stage 105. The other output OUS of buffer 113 is the compressed data stream of the encoder conforming to ISO/IEC 13818-2 or 11172-2 specifications or to similar data compression standards and to desired constant or variable bit rates.
Chrominance is encoded correspondingly whereby motion estimation is normally carried out for luminance only.

### Summary of the Invention

It is one object of the invention to disclose a method and an apparatus for encoding digital video signals using a scalable MPEG-2 encoding chip set with a minimum number of chips and an optimum partition of the required encoder functions with respect to the specific chips, wherein the prediction step is performed in the motion estimation chip and in a bitstream assembling step a multi-purpose memory is used which does not contain pixel data. Further embodiments of this invention are claimed in the dependent claims. This object is achieved by the method disclosed in claim 1 and by the apparatus according to claim 6.

The invention relates to video data compression and bitstream encoding, conforming in particular to the MPEG-2 and MPEG-1 Coding of Moving Pictures Standard (ISO/IEC 13818-2 and 11172-2), and is based on a VLSI architecture and can be used in conjunction with standard controller circuits. The invention is tailored to provide high speed computation as needed for real time execution of MPEG-2 video encoding algorithms.
A real-time MPEG-2 video encoder has been developed based on a set of dedicated IC designs. The encoder compresses video pictures according to ITU-R 601 recommendation into bit streams from e.g. 1Mbit/s to 15Mbit/s according to the specifications of the MPEG-2 video standard, Main Profile at Main Level (MP@ML). Other input formats can be handled, including various HDTV source formats, which can be converted into bit streams of the Main Profile at High Level.
The main functionality of the encoder consists of a preprocessing stage, a motion estimation stage and a bit stream encoding stage. These functions are supported by specific ICs: a preprocessor circuit, a coarse and a fine motion estimation IC and a bit stream encoder. Each of the ICs controls an external memory space which can be realized with e.g. conventional DRAM parts. The chip set is controlled by standard external microcontrollers and includes on-chip RISC machines for flexible reconfiguration.
The implementation of the encoder is not bound by the MPEG-2 video standard (ISO/IEC 13818-2). With this inventive MPEG-2 chip set, complexity and quality are scalable. This allows the construction of relatively simple encoders for applications with low demands on picture quality, as well as very complex encoders for high quality requirements. Based on the inventive architecture, several processors of the same type can be used in parallel to increase processing power. This provides for all encoding features specified in the MPEG-2 Main Profile, plus additional functionality which is not subject to that standardization.
Input signal formats are e.g. 576 lines/frame at 25 frames/sec, or 480 lines/frame at 29.97 frames/sec, with luminance Y and chrominance C_{b}, Cᵣ in 4:2:2 format.

An MPEG-2 MP encoder does not need to provide all compression techniques and the full choice of MP functionality, as long as it provides a valid bitstream. This allows some simplifications.

The processing functions required for MPEG-2 encoding are organized in three main ICs or stages. A preprocessor contains all input and pre-processing functions like picture format conversion which are required for data compression. A motion estimator contains all motion estimation and motion prediction functions and a bit stream encoder includes all bitstream generation for MPEG-2 encoding like DCT, quantizer, inverse quantizer, inverse DCT, zigzag scanning, and RLC/VLC encoding, but does not include motion prediction. The present invention concerns in particular the bitstream encoder chip.

In principle, the inventive method is suited for encoding digital video signals using motion estimation and an encoding loop including a transformation step, a quantisation step, an inverse quantisation step, an inverse transformation step, a reconstruction step and a pixel macroblock prediction step in which motion information derived from said motion estimation is used for the prediction, wherein difference signals between pixel macroblock data and predicted pixel macroblock data and/or pixel macroblock data as such are processed in said transformation step and the output signals of said quantisation step are further processed to derive therefrom encoded video signals including information derived from said motion information, wherein either:
the encoding is carried out in an integrated circuit using pipeline processing for carrying out said transformation, quantisation, inverse quantisation, inverse transformation and reconstruction steps, but not said prediction step, and wherein said further processing includes a zigzag scanning step, a runlength and variable length encoding step, and a bitstream assembling step for which memory means are used which serve as data rate control buffer and as intermediate storage for bit stream data not equal or less then macroblock level which are supplied to said integrated circuit by controlling means,
and whereby in at least one other integrated circuit, being connected to said integrated circuit and to which picture data memory means are assigned which are used for said motion estimation and for said prediction step, said motion estimation and said prediction step is carried out,
or:
the encoding is carried out in an integrated circuit for carrying out said transformation, quantisation, inverse quantisation, inverse transformation and reconstruction steps, but not said prediction step, and wherein said further processing includes a zigzag scanning step, a runlength and variable length encoding step, and a bitstream assembling step for which memory means are used which serve at least as data rate control buffer,
whereby the buffer filling level is not calculated from the data being stored in said memory means but is derived from counting respective bits in said bitstream assembling step and the such derived buffer filling level is used to control said quantisation step and said inverse quantisation step, and whereby in at least one other integrated circuit, being connected to said integrated circuit and to which picture data memory means are assigned which are used for said motion estimation and for said prediction step, said motion estimation and said prediction step is carried out.

Advantageous additional embodiments of the inventive method are resulting from the respective dependent claims.

In principle the inventive apparatus is suited for encoding digital video signals using motion estimation means and an encoding loop including transformation means, quantisation means, inverse quantisation means, inverse transformation means, reconstruction means and pixel macroblock prediction means in which motion information derived from said motion estimation is used in said prediction means, wherein difference signals between pixel macroblock data and predicted pixel macroblock data and/or pixel macroblock data as such are processed in said transformation means and the output signals of said quantisation means are further processed to derive therefrom encoded video signals including information derived from said motion information, and wherein either:
the encoding is carried out using pipeline processing in an integrated circuit including said transformation, quantisation, inverse quantisation, inverse transformation, and reconstruction means, but not said prediction means, and wherein said further processing includes zigzag scanning means, runlength and variable length encoding means, and bitstream assembling means for which memory means are used which serve as data rate control buffer and as intermediate storage for bit stream data not equal or less then macroblock level which are supplied to said integrated circuit by controlling means,
and whereby in at least one other integrated circuit, being connected to said integrated circuit and to which picture data memory means are assigned which are used for said motion estimation and for said prediction means, said motion estimation and said prediction means is included,
or:
the encoding is carried out in an integrated circuit including said transformation, quantisation, inverse quantisation, inverse transformation and reconstruction means, but not said prediction means, and wherein said further processing includes zigzag scanning means, runlength and variable length encoding means, and bitstream assembling means for which memory means are used which serve at least as data rate control buffer,
whereby the buffer filling level is not calculated from the data being stored in said memory means but is derived from counting respective bits in said bitstream assembling means and the such derived buffer filling level is used to control said quantisation means and said inverse quantisation means, and whereby in at least one other integrated circuit, being connected to said integrated circuit and to which picture data memory means are assigned which are used for said motion estimation and for said prediction means, said motion estimation and said prediction means is included.

Advantageous additional embodiments of the inventive apparatus are resulting from the respective dependent claims.

### Drawings

Preferred embodiments of the invention are described with reference to the accompanying drawings, which show in:
- Fig. 1: principle functional blocks for encoding MPEG-2 video data streams;
- Fig. 2: block diagram of the inventive chip set;
- Fig. 3: example for a more detailed embodiment of the inventive chip set;
- Fig. 4: basic embodiment of the invention;
- Fig. 5: modified embodiment of the invention;
- Fig. 6: timing diagram for first and second pass interleaving;
- Fig. 7: coring functions.

### Preferred embodiments

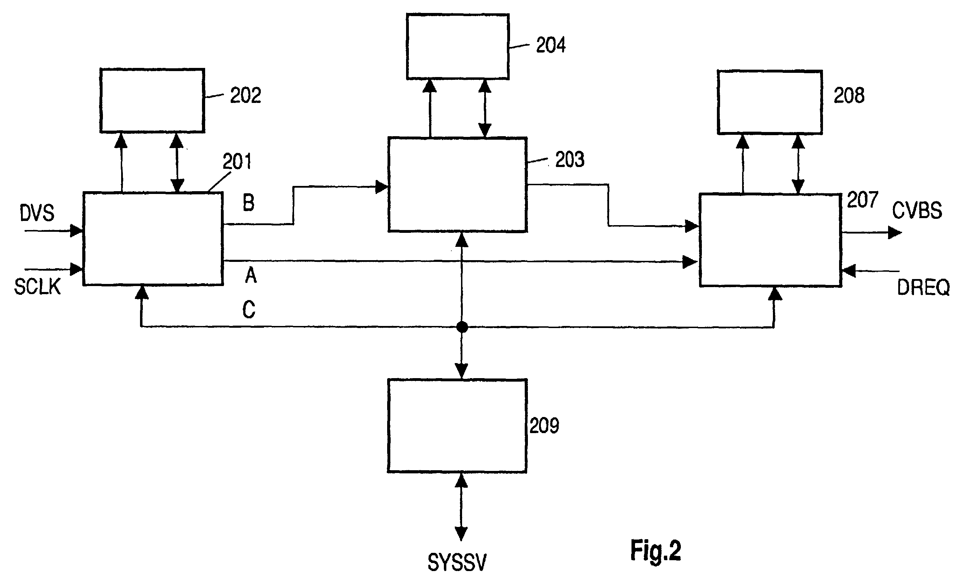

The same functionality as described with regard to Fig. 1 can be achieved with an architecture as described in connection with Fig. 2 and the further figures. In this architecture the processing functions required for MPEG-2 encoding are organized in three main ICs or stages to each of which a memory is assigned.
Preprocessing stage 201 contains all input and pre-processing functions required for data compression, i.e. block 101 of Fig. 1.
Motion estimation stage 203 contains all motion estimation and motion prediction functions, i.e. circuits 102 and 109 of Fig. 1. Thereby motion vector generation and motion vector application are on the same chip and the picture data stored on the accompanied memory 204 can be used for both functions. Stage 203 may operate on luminance and/or chrominance data.
Bit stream encoding stage 207 includes all bitstream generation for MPEG-2 encoding, i.e. circuits 103 to 108, and 110 to 117 of Fig. 1, but does not include a motion prediction circuit (circuit 109 of Fig. 1) which would require a picture data memory, e.g. a frame memory, on this chip.
Each of these main processing stages has an interface to an external memory 202, 204, and 208, as well as an interface to a controller 209, which provides for all programmable options of the encoder. This means that in connection with the above mentioned partition of the blocks of Fig. 1 into the stages 203 and 207 the content of memory 204 (for instance, pixel data of at least one field in case of storing a reference picture only, pixel data of two fields in case of storing a reference picture and a predicted picture, pixel data of three fields in case of storing a reference picture and two predicted picture for bi-directional prediction of B-pictures) needs not to be duplicated into memory 208. Thereby memory 208 can be significantly smaller and cheaper. Stages 201, 203 and 207 may contain hardwired functionality as well as programmable circuits, such as microcontroller or microcomputer cores which operate with respective software. A further advantage is the following: Motion estimation stage 203 causes a delay of several pictures (from I to next I, or P to next P, or I to next P, or P to next I picture). Since the output data of stage 203 and the picture data on bus A is needed in stage 207 in principal at the same time, memory 208 would normally be required to adjust for the different time instances of the input data. However, since stage 201 needs for some operations a big memory, e.g. a multiple picture memory, this memory is also used to compensate for the above described time delay. The result is that the input data for stage 207 in principal arrives at the appropriate time and memory 208 can have a low capacity. Thereby the picture data on bus A can have a delay of several pictures with respect to the corresponding picture data on bus B.

Due to this partitioning of functions, which is one aspect of the invention, each of the stages 201, 203 and 207 may be realized in one VLSI chip, since all stages contain just that many processing elements, as can be implemented on singular integrated circuits with the current state of the art VLSI technology, i.e. 0.8µ 2-layer HCMOS4 technology. Memories 202, 204 and 208 may consist of standard memory devices, such as 4MBit DRAMS, SDRAMs or other feasible memories.

At the input of preprocessing stage 201 standard digital video signals DVS in YC_{b}Cᵣ format related to ITU-R Recommendation 601 may be used, together with standard video synchronisation signals SCLK including e.g. 13.5Mhz clock, whereas the interfaces between stages 201 and 203 and between stages 203 and 207 operate with internal synchronization. For example, the input synchronizing signals which are related to lines and fields, are replaced by macroblock and other sync signals which are related to MPEG levels.
The encoder output interface at stage 207 provides at its output CVBS a compressed MPEG-2 video bitstream, such as the Packetized Elementary Bitstream (PES) defined in ISO 13818, together with suitable synchronization signals. This bitstream can be read out using the data request input DREQ. Preprocessing stage 201 is connected via a first bus A to motion estimation stage 203 and via a second bus B to bit stream encoding stage 207 for coding complexity pre-analyzing purposes.
Pre-analyzing allows an additional kind of rate control within each macroblock by adjusting the relevant coding parameters like inter/intra and field/frame decision. Preferably, bus A transfers no luminance data whereas bus B does. The interfaces of stages 201, 203 and 207 to the controller 209 are connected via a bi-directional third bus C and may use standard data, address and synchronization definitions as related to standard controller devices, such as Motorola or Texas Instruments circuits, e.g. TMS320C30. The controller 209, again, has an interface via bus SYSSV to the overall systems control, or a user interface computer, from where it receives parameters for encoder set-up, mode selection, etc.. Via bus SYSSV also encoder status information, such as error codes, may be communicated.
Specifically, stage 201 contains all pre-processing and data re-ordering functions, which are also the content of block 101 in Fig. 1. These functions may include horizontal and vertical filtering and decimation for the conversion from the original picture format to the encoding format, e.g. from 720 to 544 pixels per active line. As an example, conversion from so-called 4:2:2 YC_{b}Cᵣ organization, appropriate filtering and decimation of the chrominance signals to achieve the 4:2:0 encoding format, may be part of the processing functions in stage 201. Another important task of the circuit in stage 201 is the elimination of horizontal and vertical blanking intervals and the re-ordering of video data from field and line sequential scanning to the appropriate macroblock related scanning order which is useful for MPEG-2 encoding. Stage 201 provides different types of macroblock data, such as luminance and YC_{b}Cᵣ data, with their appropriate timing behavior for the subsequent processing blocks of the overall encoder. Other processing options, such as noise reduction and the detection of redundant fields in case of movie picture sequences, may be part of the functionality in stage 201. This preprocessing stage in the video encoding architecture is also responsible for detecting synchronization signals at its SCLK input and for generating synchronization signals for the respective macroblock output signals and for the rest of the encoder circuits.

Motion estimation stage 203 includes all motion estimation processing as required for MPEG-2 encoding, c.f. block 102 in Fig. 1, and includes also motion prediction functionality as described for predictor 109 in Fig. 1. Stage 207 contains the other processing elements listed in Fig. 1, in particular the DCT and its inverse, quantization and inverse quantization, run length and variable length coding functions, header assembling, and packetization. Stage 207 encodes luminance and chrominance data.
This specific partitioning of functions is suitable and advantageous, e.g. because the high speed processing of motion estimation and motion prediction and the common use of motion vectors is on the same chip.
Another specific partitioning of functions relates to bitstream generation and rate control functions as contained in the blocks 111, 112, 113 and 114 in Fig. 1. These functions can be implemented in dedicated hardware circuits in stage 207, when related to fast block, macroblock and slice level processing. All MPEG video bitstream operations and rate control functions above slice level (which require less operation speed) can be implemented on a standard controller like in stage 209.

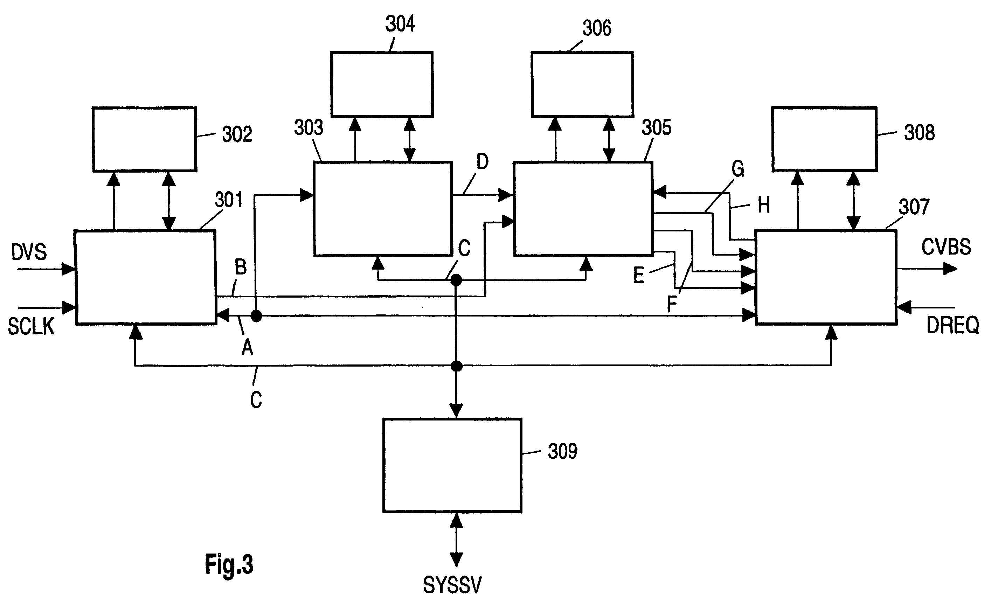

In a more detailed pictorial, Fig. 3 shows another embodiment of the invention. Stages 301 and 307 correspond to stages 201 and 207, respectively. The realization of stage 203 is now done in an alternative manner. The functionality of stage 203 is again partitioned into a coarse motion estimation stage 303 and a fine motion estimation stage 305. This hierarchical motion estimation is related to more elaborate motion estimation techniques, where more processing power is needed for implementing motion vector search procedures.
Stages 303 and 305 preferably operate on luminance only but may operate also on chrominance data. It is also possible that stage 303 operates on luminance signals only whereas stage 305 calculates fine motion vectors for luminance and chrominance signals.
If stage 303 consists of one chip, for a frame search a frame vector search area of ±64 pixels horizontally and ±32 pixels vertically can be achieved. Stage 305 can perform a full-pel search but may also calculate motion vectors having 1/2-pel accuracy. In case of full-pel search the search area is for example ±3 pixel horizontally and ±8 pixel vertically in the frame mode.
Both stages 303 and 305 are connected by a bus D transferring coarse motion vector data and have their own standard memory interfaces 304 and 306 as described with respect to Fig. 2. Controller 309 corresponds to controller 209 and is connected also to stage 303 and stage 305 via bi-directional bus C.
In this architecture, coarse motion estimation stage 303 receives its input signals from preprocessing stage 301 via bus A. The same bus is connected to bit stream encoding stage 307 for coding complexity pre-analyzing purposes. Preprocessing stage 301 provides another signal on bus B directly to fine motion estimation stage 305. Preferably, bus A transfers no luminance data whereas bus B does. Advantageously on buses A and B video picture data is carried in a specific order, related to MPEG-2 macroblock organization, together with specific synchronization signals. The YC_{b}Cᵣ data on bus B may be delayed by one frame compared to the corresponding data on bus A.
On bus D data from initial motion vectors, as computed in coarse motion estimation stage 303, is carried to fine motion estimation stage 305, which computes the final motion vectors.
Bus C carries the standard controller interface signals.
On bus E macroblock data (i.e. input signals of combiner 103) is carried from stage 305 to stage 307. This is the corresponding data as carried on bus B, but delayed according to the processing time in stage 305.
Bus F also transfers macroblock data (i.e. the output signals of predictor 109) from stage 305 to stage 307. This macroblock data relates to the fine motion vectors and prediction modes (i.e. input signals of blocks 115 and 116) which are calculated in stage 305 and forwarded on bus G to stage 307.
Bus H carries reconstructed macroblocks (i.e. output signals of adder 108) from stage 307, which are required for the
MPEG-2 prediction loop, back to stage 305. All macroblock data on buses E, F and H is accompanied by specific synchronization signals.
The data interface and related memory issues for the prediction process in MPEG-2 video encoding are solved in the invention in an advantageous way. With the bus structure depicted in Fig. 3, it is possible to keep all motion estimation and macroblock prediction tasks confined to stages 303 and 305. Consequently, all of the related memory requirements are covered by memories 304 and 306 connected to the motion estimation circuits 303 and 305. The prediction loop, as used in MPEG-2, MPEG-1 and other video encoding techniques is closed by returning the reconstructed picture data (output of circuit 108 in Fig. 1), which is contained in stage 307, back to the prediction process in fine motion estimation stage 305. The remaining memory requirements of stage 307 only relate to the bitstream encoding process. Another advantage of this kind of interface between motion estimation and bitstream generation is the possibility to calculate motion vectors on reconstructed data which are available after the inverse quantizing. This improves the encoding quality in such respect that the decoding errors in a decoder can already be taken into account in the encoder. Like in Fig. 2 coarse motion estimation stage 303 causes a delay of several pictures (from I to next I, or P to next P, or I to next P, or P to next I picture). Since the output data of the subsequent fine motion estimation stage 305 and the picture data on bus A is needed in stage 307 in principal at the same time, memory 308 would normally be required to adjust for the different time instances of the input data. However, since stage 301 needs for some operations a big memory, e.g. a multiple picture memory, this memory is also used to compensate for the above described time delay. The result is that the input data for stage 307 in principal arrives at the appropriate time and memory 308 can have a low capacity. Thereby the picture data on bus A can have a delay of several pictures with respect to the corresponding picture data on bus B.
Although fine motion estimation stage 305 introduces internally a short delay (stage 305 processes in a pipeline structure eight macroblocks and transfers them together with motion information) in the output data with respect to the data on bus A it is more advantageous to spend a respective small memory capacity for stage 307, but to save a third bus from stage 301 to stage 307. Since the encoder operates at high speed a parallel bus would be required which would consume additional pins for the chips and additional space on the board carrying the chips.

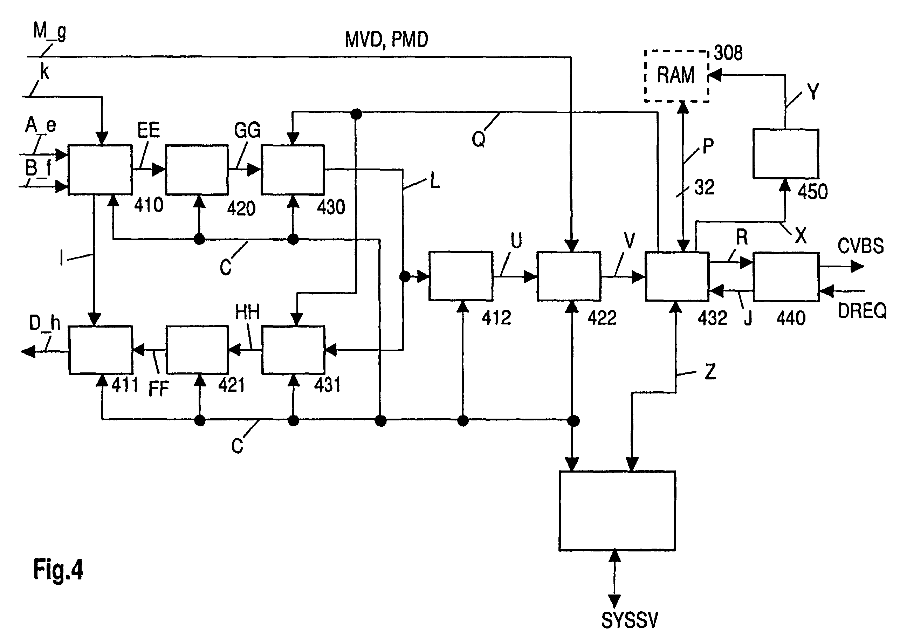

As stated above, MPEG video compression requires a prediction loop which includes DCT and its inverse as well as a quantization stage and its inverse function. In this loop, a number of decisions are needed which allow the adjustment of coding procedures to the actual picture content. The present invention relates in particular to the implementation of the bitstream encoder functionality, proposing that the prediction loop is closed via external circuitry, which includes all means for motion compensation and selection of the best prediction.
The architecture of the bitstream encoder is illustrated in Fig. 4. Advantageously, the YC_{b}Cᵣ pixel data to be encoded is received on bus A_e together with the respective YC_{b}Cᵣ pixel data belonging to the best predictor (bus B_f), i.e. predicted pixel block and macroblock, respectively. Both data, input to the circuit on buses A_e and B_f, may be organized in macroblock scan order. Consequently, the YC_{b}Cᵣ data for the reconstructed path on bus D_h is generated by combination of the input data from bus B_f (predicted macroblocks) with the data on bus FF (reconstructed macroblocks), coming from the inverse DCT and quantization stages. Advantageously, the architecture of Fig. 4 allows pipeline processing.

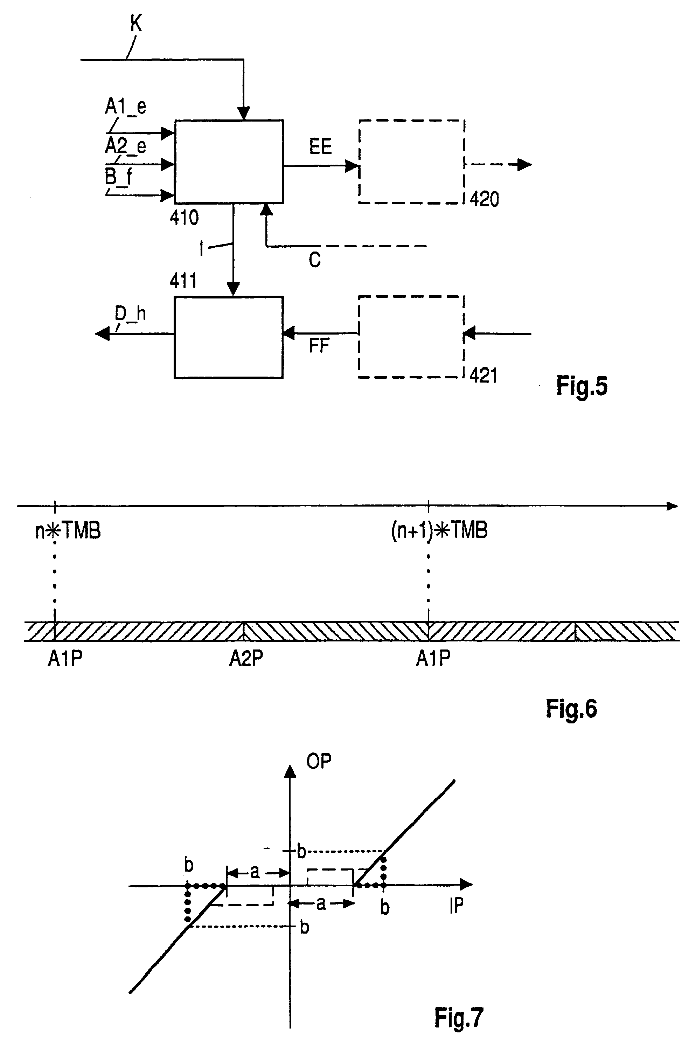

In the embodiment of Fig. 4, the block 410 contains all means for ordering macroblock data in field and frame scanning manner (denoted 'field/frame' decision, see chapter 6.1.3 "macroblock" of ISO/IEC 13818-2), and for selecting the original data on bus A_e or the pixel value differences between the original data and the predicted pixel block data on bus B_f for encoding. This kind of selection is denoted 'inter/intra' decision, see ISO/IEC 13818-2 I or P pictures. For making such decisions a block difficulty value is calculated by computing e.g. a sum of line pair difference signals for each macroblock. Block 410 may also contain means for coring, which can be used for noise reduction in the prediction loops. Three different examples for such in-loop coring function are depicted in Fig. 7: bold line, bold+dashed line, and bold+dotted line. IP is the input signal amplitude and OP is the output signal amplitude.
The original data/difference data output of block 410 is fed to block 420 via bus EE and the predicted pixel block data is transferred via connection I to block 411. Block 420 contains the DCT function (c.f. block 104). DCT data on bus GG is fed to quantization stage 430, which implements the different quantization functions of MPEG-2 (c.f. block 105). In this specific architecture, linear or non-linear quantization factors can be provided via bi-directional bus C by the controller circuit 409 and via an additional bus Q from stage 432.
The output data from quantization stage 430 enters via connection L the scanner 412 (c.f. block 110) as well as the inverse quantization stage 431 (c.f. block 106), which receives via bus C the same control functions as quantization stage 430. The output of stage 431 is fed via bus HH to block 421 (c.f. block 107) which performs the inverse DCT. The output of block 421 is fed via bus FF to block 411 which performs the respective inverse macroblock ordering and combines the predicted pixel block data on connection I with the reconstructed pixel block data on bus FF.

Scanner 412 contains zigzag and alternate scan functions as specified in MPEG-2. It provides the output signal U the pipeline data of which is forwarded to the run length and variable length encoding stages contained in unit 422 (c.f. block 111, 115, 116). Unit 422 also accepts the motion vector data MVD and PMD provided from external circuitry via serial bus M_g.
Buses A_e, B_f, D_h, M_g, and C correspond to buses E, F, H, G, and C, respectively, of Fig. 3.

Advantageous functionality features are contained in assembling stage 432 which assembles the compressed video bitstream. Stage 432 is controlled via bi-directional bus Z by controller 409 and receives the compressed video data in form of VLC code words together with the VLC code words for the motion vector data from block 422. From the local controller 409 it also receives all relevant information needed for the complete MPEG-2 bitstream syntax. Controller 409 itself gets all bitstream information belonging to syntax elements up to slice level from the processing blocks 410, 420 and 430 via bus C. This relates mainly to macroblock coding decisions, such as 'field/frame', 'inter/intra' and others. In turn, controller 409 is also able to influence these coding decisions in blocks 410, 420, 430, 411, 421, 431, 412, and 422, as well as parameters for the coring function in block 410, via bus C.
Advantageously, these coding decisions and the parameters for coring can also be provided to block 410 directly from external circuitry via bus K, which may consist of e.g. two serial buses, one for coring control and the other one for the intra/inter and the field/frame ordering decision.

All bitstream information related to syntax elements above slice level, for instance, pictures size information, bit rate information, user data, etc. can be generated externally, for example by the system supervisor, and is transmitted to controller 409 via bus SYSSV. The controller forwards this information to assembling stage 432 from where it is either inserted into the bitstream right away or is stored temporarily via bus P in the external memory 308. Memory 308 may consist of standard DRAM, SDRAM or other suitable memory devices. It is used for intermediate storage of the bitstream data and serves also as the bitstream buffer for rate control purposes.
Advantageously, bitstream assembly, buffer and rate control functions are organized in a single processing unit (assembling stage 432) which serves as a multiplexer for different syntax elements and simultaneously tracks the number of bits generated for the bitstream. As a result from this tracking process, quantization values are generated, which are fed back to quantization stage 430 and to inverse quantization stage 431 via bus Q.
Advantageously, no direct buffer filling level determination using the content of memory 308 itself is required to generate quantization factor information for bus Q. Instead, in assembling stage 432 the number of bits is counted in internal accumulator means without using memory 308 and buses P, X, and Y. That number of bits can be counted e.g. per picture or per predetermined number of macroblocks. This predetermined number can be loaded via bus Z.
Assembling stage 432 also generates memory control data which is fed via bus X to an address controller 450 for external memory 308. Memory address data is output on bus Y. All rate control functions are executed by assembling stage 432 in cooperation with the local controller 409, which supervises the overall encoding process and may steer all previous processing blocks in the bitstream generation process into a desired mode of operation, if required. Based on messages from stage 432 controller 409 may also feed back information to the overall system supervisor via bus SYSSV. This feature can be used, for instance, if several video encoders of this type cooperate on a variable bitrate basis. In this case, local bitrate information must be made available to a supervising circuit on a regular basis for global rate adjustment. In turn, the local encoders receive their respective rate adjustments from the supervisor via bus SYSSV.

Assembling stage 432 generates the complete bitstream with previously compressed data read from external memory 308 and with headers and other higher level syntax information generated locally and received from the controller 409. It passes the complete bitstream which is ready for encoder output via connection R to the unit 440, which serves as a compressed data port. Unit 440 may provide the bitstream in serial or parallel (byte wise) fashion, as a continuous bitstream or in a data burst mode, on bus CVBS. It also may generate a data valid signal, if it generates burst data. In a request mode with a succeeding processing stage (not depicted), unit 440 can accept a data request signal DREQ, which it turns into an internal request signal J for stage 432. Stage 432 is then able to determine appropriate read out times for the compressed data from the external memory.

Advantageously, motion estimation and motion prediction is carried out in fine motion estimator 305 whereby memory 308 needs not to store reconstructed or predicted picture data. Such data are stored and/or are already present in memory 306 which must store such data for motion estimation purposes. Thereby memory 308 can have a smaller capacity and bus P either can operate with lower clock rate or can be constructed with a smaller number of parallel lines only. A further bus between e.g. assembling stage 432 and blocks 410/411 is not required. Such considerations are even more important when encoding HDTV signals.

In a modified configuration according to Fig. 5, the bitstream encoder may also be used for pre-analysis of the pictures to be encoded. For this purpose, block 410 is modified to include a multiplexer which selects between macroblock input data A1_e and A2_e. Input A2_e may represent the YC_{b}Cᵣ data to be encoded finally, while input A1_e consists of the Y or YC_{b}Cᵣ data of the same signal but from a previous time instant. In this case, it is possible to use the same processing elements in blocks 410, 420, 430, 412, 422, and 432 to encode the data from input A1_e and to calculate or count the number of bits resulting from this encoding process in respective means (like in stage 432). The count can be stored in the controller 409 and can be used consequently to adjust the coding decisions and quantizer settings for the real encoding pass of the A2_e input data. This method is sometimes referred to as 'first pass and second pass encoding'.
The present invention covers the special implementation within the architecture described here. The time delay between A1_e and A2_e data must be sufficient to complete the first pass encoding before second pass encoding will to start. Dependent on the application, this time delay may consist of one or more frames and must be implemented in circuitry which provides the A1_e and A2_e data.

The current invention also relates to an implementation which allows to process both first and second pass encoding steps in the time frame given for the generation of the complete bitstream. A suitable multiplexing or interleaving method is based on a macroblock interval, as illustrated in Fig. 6 in which TMB is a macroblock interval, A1P is the processing period for the first pass, and A2P is the processing period for the second pass for the respective macroblock. However, the invention is not restricted to these specific parameters. It is also possible that two chips having the respective functions like Fig. 4 operate in parallel connection, one for the first pass and the other one for the second pass encoding, whereby both are controlled by controller 409.

All interchip data communications can be synchronous data transfers at a system clock frequency of e.g. 27MHz.

The basic functions as shown in Fig. 1 and Fig. 4, as far as MPEG-1 is concerned, can be carried out with a circuitry like on the STi3230 chip of SGS-Thomson. Motion estimation and motion estimation controller circuitry as such is known from the STi3220 and STi3223 chips of SGS-Thomson. DCT and inverse DCT can be carried out using circuitry like on the IMSA121, STV3208, and STV3200 chips of SGS-Thomson.

The overall system is described in more detail in another European patent application EP95119207 of the applicant.
The preprocessing stage 201, 301 is described in more detail in a further European patent application EP95119202 of the applicant.
The coarse motion estimation stage 303 is described in more detail in another patent application of the applicant (FR 9110158).
The fine motion estimation stage 305 is described in more detail in a further European patent application EP95402787 of the applicant.

The invention can be used for e.g. digital video broadcasting, for recording and playback of digital video on compact discs, for interactive video services as well as for program contribution, ENG/SNG, video servers, non-linear editing and so forth, based on the MPEG-2 standard as well as the MPEG-1 standard.

## Claims

1. Method for encoding digital video signals (INS, DVS) using motion estimation (102; 203; 303, 305)
and an encoding loop including a transformation step (104; 420), a quantisation step (105; 430), an inverse quantisation step (106; 431), an inverse transformation step (107; 421), a reconstruction step (108; 411) and a pixel macroblock prediction step (109) in which motion information (MVD, PMD) derived from said motion estimation is used for the prediction,
wherein difference signals (103) between pixel macroblock data and predicted pixel macroblock data andlor pixel macroblock data as such are processed in said transformation step
and the output signals of said quantisation step are further processed (110 to 114; 412, 422, 432, 440, 450, 308) to derive therefrom encoded video signals (OUS;CVBS) including information (MVD, PMD) derived from said motion information
***characterised in that***
the encoding is carried out in an integrated circuit (207; 307) using pipeline processing for carrying out said transformation, quantisation, inverse quantisation, inverse transformation and reconstruction steps, but not said prediction step,
and wherein said further processing includes a zigzag scanning step (110; 412), a runlength and variable length encoding step (111, 115, 116; 422), and a bitstream assembling step (432) for which memory means (308) are used which serve as data rate control buffer (113)
and as intermediate storage for bit stream data (CVBS) not equal or less than macroblock level which are supplied to said integrated circuit (207; 307) by controlling means (209; 309; 409),
and whereby in at least one other integrated circuit (203; 303, 305), being connected to said integrated circuit (207; 307) and to which picture data memory means (204; 304, 306) are assigned which are used for said motion estimation and for said prediction step, said motion estimation (102; 203; 303, 305) and said prediction step (109) is carried out.,
and whereby the motion estimation is carried out on reconstructed data comprising a coarse estimation stage (303) and a fine estimation stage (305),
whereby the coarse estimation stage (303) is connected with a bit stream encoding stage (307) by a multiple of busses, namely a bus (E) carrying video picture data organized in macroblock organization, a bus (F) carrying macroblock data relating to fine motion vectors and prediction modes which are calculated in said fine estimation stage (305) and a bus (H) carrying reconstructed macroblocks from bit stream encoding stage (307) back to the fine estimation stage (305)

2. Method according to claim 1, **characterized in that** a buffer filling level is not calculated from the data being stored in said memory means (308) but is derived from counting respective bits in said bitstream assembling step (432) and the such derived buffer filling level is used to control said quantisation step (105; 430) and said inverse quantisation step (106; 431),

3. Method according to claim 1 or 2, wherein the digital video signals (INS, DVS) to be encoded are MPEG-1 or MPEG-2 signals.

4. Method according to claim 3, wherein in said assembling step (432) video bitstream operations and rate control functions are implemented using a or said, respectively, controlling means (209; 309; 409) which are connected to said integrated circuit (207; 307).

5. Method according to any of claims 1 to 4, wherein for the purpose of determining encoding alternatives an additional encoding pre-analysis step is carried out in which pixel macroblock data (A1_e) from a previous time instant at first pass said transformation step (104; 420), said quantisation step (105; 430), said inverse quantisation step (106; 431), said inverse transformation step (107; 421), and said reconstruction step (108; 411), before the present pixel macroblock data (A2_e) to be encoded pass said transformation step, said quantisation step, said inverse quantisation step, said inverse transformation step, and said reconstruction step.

6. Apparatus for encoding digital video signals (INS, DVS) using motion estimation means (102; 203; 303, 305) and an encoding loop including transformation means (104; 420), quantisation means (105; 430), inverse quantisation means (106; 431), inverse transformation means (107; 421), reconstruction means (108; 411) and pixel macroblock prediction means (109) in which motion information (MVD, PMD) derived from said motion estimation is used in said prediction means, wherein difference signals (103) between pixel macroblock data and predicted pixel macroblock data and/or pixel macroblock data as such are processed in said transformation means and the output signals of said quantisation means are further processed (110 to 114; 412, 422, 432, 440, 450, 308) to derive therefrom encoded video signals (OUS;CVBS) including information (MVD, PMD) derived from said motion information, **characterised in that** the encoding is carried out using pipeline processing in an integrated circuit (207; 307) including said transformation, quantisation, inverse quantisation, inverse transformation, and reconstruction means, but not said prediction means, and wherein said further processing includes zigzag scanning means (110; 412), runlength and variable length encoding means (111, 115, 116; 422), and bitstream assembling means (432) for which memory means (308) are used which serve as data rate control buffer (113) and as intermediate storage for bit stream data (CVBS) not equal or less than macroblock level which are supplied to said integrated circuit (207; 307) by controlling means (209; 309; 409) and whereby in at least one other integrated circuit (203; 303, 305), being connected to said integrated circuit (207; 307) and to which picture data memory means (204; 304, 306) are assigned which are used for said motion estimation and for said prediction means, said motion estimation (102; 203; 303, 305) and said prediction means (109) is included, and whereby the motion estimation is provided for being carried out on reconstructed data comprising a coarse estimation stage (303) and a fine estimation stage (305), whereby the coarse estimation stage (303) is connected with a bit stream encoding stage (307) by a multiple of busses, namely a bus (E) carrying video picture data organized in macroblock organization, a bus (F) carrying macroblock data relating to fine motion vectors and prediction modes which are calculated in said fine estimation stage (305) and a bus (H) carrying reconstructed macroblocks from bit stream encoding stage (307) back to the fine estimation stage (305).

7. Apparatus according to claim 6, wherein the digital video signals (INS, DVS) to be encoded are MPEG-1 or MPEG-2 signals.

8. Apparatus according to claim 7, wherein in said assembling means (432) video bitstream operations and rate control functions above slice level are implemented using a or said, respectively, controlling means (209; 309; 409) which are connected to said integrated circuit (207; 307).

## Patentansprüche

1. Verfahren zur Codierung digitaler Videosignale (INS, DVS) unter Verwendung von Bewegungsschätzung (102; 203; 303, 305) und einer Codierungsschleife, die folgendes enthält: einen Transformationsschritt (104; 420), einen Quantisierungsschritt (105; 430), einen Invers-Quantisierungsschritt (106; 431), einen Rücktransformationsschritt (107; 421), einen Rekonstruktionsschritt (108; 411) und einen Pixel-Makroblock-Prädiktionsschritt (109), bei dem aus der Bewegungsschätzung abgeleitete Bewegungsinformationen (MVD, PMD) für die Prädiktion verwendet werden, wobei in dem Transformationsschritt Differenzsignale (103) zwischen Pixel-Makroblock-Daten und vorhergesagten Pixel-Makroblock-Daten und/oder Pixel-Makroblock-Daten an sich verarbeitet werden und die Ausgangssignale des Quantisierungsschritts weiterverarbeitet werden (110 bis 114; 412, 422, 432, 440, 450, 308), um daraus codierte Videosignale (OUS;CVBS) einschließlich aus den Bewegungsinformationen abgeleiteter Informationen (MVD, PMD) abzuleiten,
**dadurch gekennzeichnet, daß**
die Codierung in einer integrierten Schaltung (207; 307) unter Verwendung von Pipeline-Verarbeitung zur Ausführung der Schritte der Transformation, der Quantisierung, der Invers-Quantisierung, der Rücktransformation und der Rekonstruktion, aber nicht des Prädiktionsschritts ausgeführt wird,
und wobei die weitere Verarbeitung folgendes umfaßt: einen Schritt des Zickzack-Scannens (110; 412), einen Schritt des Lauflängen- und Codierens mit variabler Länge (111, 115, 116; 422) und einen Bitstromzusammenstellschritt (432), wofür Speichermittel (308) verwendet werden, die als ein Datenratensteuerpuffer (113) und als eine Zwischenspeicherung für Bitstromdaten (CVBS) dienen, die nicht kleiner oder gleich einem Makroblockpegel sind, die der integrierten Schaltung (207; 307) durch Steuermittel (209; 309; 409) zugeführt werden,
und wodurch in mindestens einer weiteren integrierten Schaltung (203; 303, 305), die mit der integrierten Schaltung (207; 307) verbunden ist und der Bilddatenspeichermittel (204; 304, 306) zugeordnet sind, die für die Bewegungsschätzung und für den Prädiktionsschritt verwendet werden, die Bewegungsschätzung (102; 203; 303, 305) und der Prädiktionsschritt (109) ausgeführt werden,
und wodurch die Bewegungsschätzung an rekonstruierten Daten ausgeführt wird, mit einer Grob-Schätzstufe (303) und einer Fein-Schätzstufe (305), wodurch die Grob-Schätzstufe (303). mit einer Bitstromcodierungsstufe (307) durch mehrere Busse, nämlich einen Bus (E), der in Makroblockorganisation organisierte Videobilddaten führt, einen Bus (F), der Fein-Bewegungsvektoren und Prädiktionsmodi, die in der Fein-Schätzstufe (305) berechnet werden, betreffende Makroblockdaten führt, und einen Bus (H), der rekonstruierte Makroblöcke aus der Bitstromcodierungsstufe (307) zurück zu der Fein-Schätzstufe (305) führt, verbunden wird.

2. Verfahren nach Anspruch 1, **dadurch gekennzeichnet, daß** ein Pufferfüllstand nicht aus den in den Speichermitteln (308) gespeicherten Daten berechnet, sondern aus einem Zählen jeweiliger Bit in dem Bitstromzusammenstellschritt (432) abgeleitet wird und der so abgeleitete Pufferfüllstand zur Steuerung des Quantisierungsschritts (105; 430) und des Invers-Quantisierungsschritts (106; 431) verwendet wird.

3. Verfahren nach Anspruch 1 oder 2, wobei die zu codierenden digitalen Videosignale (INS, DVS) MPEG-1- oder MPEG-2-Signale sind.

4. Verfahren nach Anspruch 3, wobei bei dem Zusammenstellschritt (432) unter Verwendung eines bzw. der Steuermittel (209; 309; 409), die mit der integrierten Schaltung (207; 307) verbunden sind, Videobitstromoperationen und Ratensteuerfunktionen implementiert werden.

5. Verfahren nach einem der Ansprüche 1 bis 4, wobei zum Zweck der Bestimmung von Codierungsalternativen ein zusätzlicher Voranalyseschritt ausgeführt wird, bei dem Pixel-Makroblockdaten (A1_e) aus einem vorherigen Zeitpunkt zuerst den Transformationsschritt (104; 420), den Quantisierungsschritt (105; 430), den Invers-Quantisierungsschritt (106; 431), den Rücktransformationsschritt (107; 421) und den Rekonstruktionsschritt (108; 411) passieren, bevor die zu codierenden aktuellen Pixel-Makroblockdaten (A2_e) den Transformationsschritt, den Quantisierungsschritt, den Invers-Quantisierungsschritt, den Rücktransformationsschritt und den Rekonstruktionsschritt passieren.

6. Vorrichtung zur Codierung digitaler Videosignale (INS, DVS) unter Verwendung von Bewegungsschätzungsmitteln (102; 203; 303, 305) und einer Codierungsschleife, die folgendes enthält: Transformationsmittel (104; 420), Quantisierungsmittel (105; 430), Invers-Quantisierungsmittel (106; 431), Rücktransformationsmittel (107; 421), Rekonstruktionsmittel (108; 411) und Pixel-Makroblock-Prädiktionsmittel (109), wobei aus der Bewegungsschätzung abgeleitete Bewegungsinformationen (MVD, PMD) für die Prädiktion verwendet werden, wobei in den Transformationsmitteln Differenzsignale (103) zwischen Pixel-Makroblock-Daten und vorhergesagten Pixel-Makroblock-Daten und/oder Pixel-Makroblock-Daten an sich verarbeitet werden und die Ausgangssignale des Quantisierungsschritts weiterverarbeitet werden (110 bis 114; 412, 422, 432, 440, 450, 308), um daraus codierte Videosignale (OUS;CVBS) einschließlich aus den Bewegungsinformationen abgeleiteter Informationen (MVD, PMD) abzuleiten,
**dadurch gekennzeichnet, daß** die Codierung in einer integrierten Schaltung (207; 307) unter Verwendung von Pipeline-Verarbeitung ausgeführt wird, die die Mittel zur Transformation, zur Quantisierung, zur Invers-Quantisierung, zur Rücktransformation und zur Rekonstruktion, aber nicht die Prädiktionsmittel enthält, und wobei die weitere Verarbeitung folgendes umfaßt: Zickzack-Scan-Mittel (110, 412), Mittel zur Lauflängencodierung und Codierung mit variabler Länge (111, 115, 116; 422) und Bitstromzusammenstellmittel (432), wofür Speichermittel (308) verwendet werden, die als ein Datenratensteuerpuffer (113) und als eine Zwischenspeicherung für Bitstromdaten (CVBS) dienen, die nicht kleiner oder gleich einem Makroblockpegel sind, die der integrierten Schaltung (207; 307) durch Steuermittel (209; 309; 409) zugeführt werden, und wodurch in mindestens einer weiteren integrierten Schaltung (203; 303, 305), die mit der integrierten Schaltung (207; 307) verbunden ist und der Bilddatenspeichermittel (204; 304, 306) zugeordnet sind, die für die Bewegungsschätzung und für den Prädiktionsschritt verwendet werden, die Bewegungsschätzungsmittel (102; 203; 303, 305) und die Prädiktionsmittel (109) enthalten sind und wodurch die Bewegungsschätzung dafür bereitgestellt wird, an rekonstruierten Daten ausgeführt zu werden, mit einer Grob-Schätzstufe (303) und einer Fein-Schätzstufe (305), wodurch die Grob-Schätzstufe (303) mit einer Bitstromcodierungsstufe (307) durch mehrere Busse, nämlich einen Bus (E), der in Makroblockorganisation organisierte Videobilddaten führt, einen Bus (F), der Fein-Bewegungsvektoren und Prädiktionsmodi, die in der Fein-Schätzstufe (305) berechnet werden, betreffende Makroblockdaten führt, und einen Bus (H), der rekonstruierte Makroblöcke aus der Bitstromcodierungsstufe (307) zurück zu der Fein-Schätzstufe (305) führt, verbunden wird.

7. Vorrichtung nach Anspruch 6, wobei die zu codierenden digitalen Videosignale (INS, DVS) MPEG-1- oder MPEG-2-Signale sind.

8. Vorrichtung nach Anspruch 7, wobei in dem Zusammenstellmittel (432) unter Verwendung eines bzw. der Steuermittel (209; 309; 409), die mit der integrierten Schaltung (207; 307) verbunden sind, Videobitstromoperationen und Ratensteuerfunktionen über dem Slice-Pegel implementiert werden.

## Revendications

1. Méthode de codage des signaux vidéo numériques (INS, DVS) effectué à l'aide d'une évaluation (102, 203, 303, 305) du mouvement
et d'une boucle de codage comprenant une étape de transformation (104, 420), une étape de quantisation (105, 430), une étape de quantisation inverse (106, 431), une étape de transformation inverse (107, 421), une étape de reconstruction (108, 411) et une étape de prédiction de bloc macro de pixels (109) au cours de laquelle les informations de mouvement (MVD, PMD) dérivées de l'évaluation de mouvement sont utilisées pour la prédiction, les signaux de différence (103) entre les données du bloc macro de pixels et les données du bloc macro de pixels prédites et/ou les données du bloc macro de pixels en tant que telles étant traités lors de l'étape de transformation,
et les signaux de sortie de l'étape de quantisation étant encore traités (110 à 114, 412, 422, 432, 440, 450, 308) pour faire dériver de ces signaux des signaux vidéo codés (OUS, CVBS) comprenant des informations (MVD, PMD) dérivées des informations de mouvement,
**caractérisée en ce que**
le codage est effectué dans un circuit intégré (207, 307) à l'aide du traitement de pipeline pour exécuter les étapes de transformation, de quantisation, de quantisation inverse, de transformation inverse et de reconstruction, mais pas l'étape de prédiction,
et où le traitement ultérieur comprend une étape de balayage en zigzag (110, 412), une étape de codage de la longueur de course et de la longueur variable (111, 115, 116, 422) et une étape d'assemblage du flux binaire (432) pour laquelle les supports de mémoire (308) sont utilisés, servent de mémoire tampon de contrôle du débit de données (113)
et de stockage intermédiaire pour les données de flux binaire (CVBS) différentes de ou inférieures au niveau du bloc macro qui sont fournies au circuit intégré (207, 307) par des supports de contrôle (209, 309, 409),
et où, dans au moins un autre circuit intégré (203, 303, 305), connecté au circuit intégré (207, 307) et auquel sont affectés des supports de mémoire de données d'image (204, 304, 306), utilisés pour l'étape d'évaluation de mouvement et pour l'étape de prédiction, on exécute les étapes d'évaluation de mouvement (102, 203, 303, 305) et de prédiction (109),
et où l'évaluation du mouvement est effectuée sur des données reconstruites comprenant une étape d'évaluation grossière (303) et une étape d'évaluation précise (305), l'étape d'évaluation grossière (303) étant associée à une étape de codage de flux binaire (307) par un grand nombre de bus, à savoir un bus (E) acheminant les données d'image vidéo organisées en bloc macro, un bus (F) acheminant les données de bloc macro relatives aux vecteurs de mouvement précis et aux modes de prédiction, calculés lors de l'étape d'évaluation précise (305), et un bus (H) acheminant les blocs macro reconstruits de l'ëtape de codage de flux binaire (307) à nouveau vers l'étape d'évaluation précise (305).

2. Méthode selon la revendication 1,
**caractérisée en ce que**
le niveau de remplissage de la mémoire tampon n'est pas calculé à partir des données stockées dans le support de mémoire (308), mais provient du comptage des bits respectifs de l'étape d'assemblage de flux binaire (432) et ce niveau de remplissage de la mémoire tampon dérivé permet de contrôler l'étape de quantisation (105, 430) et l'étape de quantisation inverse (106, 431).

3. Méthode selon la revendication 1 ou 2,
selon laquelle les signaux vidéo numériques (INS, DVS) à coder sont des signaux MPEG-1 ou MPEG-2.

4. Méthode selon la revendication 3,
selon laquelle, lors de l'étape d'assemblage (432), des opérations de flux binaire vidéo et des fonctions de contrôle du débit sont implémentées en utilisant un ou respectivement les supports de contrôle (209, 309, 409) associés au circuit intégré (207, 307).

5. Méthode selon l'une des revendications 1 à 4,
selon laquelle, afin de déterminer des solutions alternatives de codage, une étape supplémentaire d'analyse préalable de codage est exécutée, étape au cours de laquelle les données de bloc macro de pixels (A1_e) provenant d'un instant précédent subissent tout d'abord l'étape de transformation (104, 420), l'étape de quantisation (105, 430), l'étape de quantisation inverse (106, 431), l'étape de transformation inverse (107, 421), l'étape de reconstruction (108, 411), avant que les données de bloc macro de pixels présentes (A2_e) à coder ne subissent l'étape de transformation, l'étape de quantisation, l'étape de quantisation inverse, l'étape de transformation inverse et l'étape de reconstruction.

6. Appareil de codage des signaux vidéo numériques (INS, DVS) effectué à l'aide d'un support d'évaluation du mouvement (102, 203, 303, 305) et d'une boucle de codage comprenant un support de transformation (104, 420), un support de quantisation (105, 430), un support de quantisation inverse (106, 431), un support de transformation inverse (107, 421), un support de reconstruction (108, 411) et un support de prédiction de bloc macro de pixels (109) dans lequel les informations de mouvement (MVD, PMD) dérivées de l'évaluation de mouvement sont utilisées dans les moyens de prédiction, les signaux de différence (103) entre les données du bloc macro de pixels et les données du bloc macro de pixels prédites et/ou les données du bloc macro de pixels en tant que telles, étant traités dans le support de transformation et les signaux de sortie du support de quantisation étant encore traités (110 à 114, 412, 422, 432, 440, 450, 308) pour faire dériver de ces signaux des signaux vidéo codés (OUS, CVBS) comprenant des informations dérivées (MVD, PMD) des informations de mouvement,
**caractérisé en ce que**
le codage est effectué à l'aide du traitement de pipeline dans un circuit intégré (207, 307) comprenant les supports de transformation, de quantisation, de quantisation inverse, de transformation inverse et de reconstruction, mais pas le support de prédiction, et le traitement ultérieur comprend un support de balayage en zigzag (110, 412), un support de codage de la longueur de course et de la longueur variable (111, 115, 116, 422) et un support d'assemblage du flux binaire (432) pour lequel les supports de mémoire (308) sont utilisés, servent de mémoire tampon de contrôle du débit de données (113) et de stockage intermédiaire pour les données de flux binaire (CVBS) différentes de ou inférieures au niveau du bloc macro qui sont fournies au circuit intégré (207, 307) par des supports de contrôle (209, 309, 409), et où, dans au moins un autre circuit intégré (203, 303, 305), connecté au circuit intégré (207, 307) et auquel sont affectés des supports de mémoire de données d'image (204, 304, 306), utilisés pour le support d'évaluation de mouvement et pour le support de prédiction, les supports d'évaluation de mouvement ((102, 203, 303, 305) et de prédiction (109) sont inclus, et où l'évaluation du mouvement est prévue pour être effectuée sur des données reconstruites comprenant une étape d'évaluation grossière (303) et une étape d'évaluation précise (305), l'étape d'évaluation grossière (303) étant associée à une étape de codage de flux binaire (307) par un grand nombre de bus, à savoir un bus (E) acheminant les données d'image vidéo organisées en bloc macro, un bus (F) acheminant les données de bloc macro relatives aux vecteurs de mouvement précis et aux modes de prédiction, calculés lors de l'étape d'évaluation précise (305), et un bus (H) acheminant les blocs macro reconstruits de l'étape de codage de flux binaire (307) à nouveau vers l'étape d'évaluation précise (305).

7. Appareil selon la revendication 6,
dans lequel les signaux vidéo numériques (INS, DVS) à coder sont des signaux MPEG-1 ou MPEG-2.

8. Appareil selon la revendication 7,
dans lequel, lors de l'étape d'assemblage (432), des opérations de flux binaire vidéo et des fonctions de contrôle du débit au-dessus du niveau en tranches sont implémentées en utilisant un ou respectivement les supports de contrôle (209, 309, 409) associés au circuit intégré (207, 307).
